Europäisches Patentamt

European Patent Office

Office européen des brevets

(19)

(11) Veröffentlichungsnummer : **0 499 587 A1**

(12) # EUROPÄISCHE PATENTANMELDUNG

(21) Anmeldenummer : **92810086.6**

(51) Int. Cl.⁵ : **A01N 25/04**

(22) Anmeldetag : **06.02.92**

(30) Priorität : **15.02.91 CH 468/91**

(43) Veröffentlichungstag der Anmeldung :
**19.08.92 Patentblatt 92/34**

(84) Benannte Vertragsstaaten :
**BE CH DE FR GB IT LI**

(71) Anmelder : **CIBA-GEIGY AG**
**Klybeckstrasse 141**
**CH-4002 Basel (CH)**

(72) Erfinder : **Fringeli, Werner, Dr.**
**In den Kurzen 2**
**CH-4242 Laufen (CH)**
Erfinder : **Hammers, Ingrid, Dr.**
**Hauptstrasse 4**
**W-7859 Efringen-Kirchen (DE)**

(54) **Insektizide Mikroemulsionen.**

(57)    Die vorliegende Erfindung betrifft Mikroemulsionen, die mit einem Gehalt von 1-35 Gew.-% an einer praktisch wasserunlöslichen insektiziden Wirksubstanz oder Mischung derartiger Wirksubstanzen, einem Gehalt von 0-10 Gew.-% eines wasserlöslichen Polymeren, einem Gehalt von 2-70 Gew.-% eines Oxalkylierungsproduktes mit 15-20 Ethylenoxideinheiten des Anlagerungsproduktes von 2,5-3 Mol Styrol an 1 Mol Phenol und einem Gehalt an Wasser von 0-97 Gew.-%, sowie gegebenenfalls noch Hilfsstoffen stabile Lösungen bilden, welche frei sind von organischen Lösungsmitteln und welche einen hohen Ausziehgrad besitzen ; weiterhin werden die Herstellung derartiger Mikroemulsionen und ihre Verwendung zum Ausrüsten wollhaltiger Substrate gegen Motten- und Käferfrass umfasst.

EP 0 499 587 A1

Die vorliegende Erfindung betrifft Mikroemulsionen einer praktisch wasserunlöslichen insektiziden Wirksubstanz, deren Herstellung und Verwendung.

Es besteht ein Bedarf an flüssigen, mit Wasser in beliebigen Verhältnissen verdünnbaren, Formulierungen praktisch wasserunlöslicher insektizider Wirksubstanzen. Bleiben derartige Formulierungen klar und entmischen sich nicht bzw. bilden keine Emulsionstropfen, so spricht man von einer Mikroemulsion oder kolloidalen Lösung. Die Formulierungen sollten darüberhinaus als Konzentrate vorliegen, über einen Zeitraum von 2-3 Monaten bei Temperaturen von 15-25°C stabil sein, gut auf den zu behandelnden Substraten ausziehen (hohe Ergiebigkeit) und keine organischen Lösungsmittel enthalten.

Die bisherigen aus dem Stand der Technik bekannt gewordenen Wirksubstanz-Formulierungen werden jedoch immer nur Teilaspekten obiger Forderungen gerecht. So beschreibt z.B. die EP-PS 0 055 401 Mikroemulsionen, welche grössere Anteile organischer Lösungsmittel enthalten; angeführt werden beispielsweise Diethylenglykolmonoethylether (Bsp. 3), Dimethylformamid (Bsp. 4) oder Ethylenglykol (Bsp. 5). Organische Lösungsmittel belasten die Umwelt.

Aufgabe der Erfindung war es daher u.a. Mikroemulsionen auf rein wässriger Basis zu entwickeln, die somit frei von organischen Lösungsmitteln sind.

Überraschenderweise wurden nun Mikroemulsionen gefunden, die mit einem Gehalt von 1 bis 35 Gew.-% an einer praktisch wasserunlöslichen insektiziden Wirksubstanz oder Mischung derartiger Wirksubstanzen, einem Gehalt von 0 bis 10 Gew.-% eines wasserlöslichen Polymeren, einem Gehalt von 2 bis 70 Gew.-% eines Oxalkylierungsproduktes mit 15 bis 20 Ethylenoxideinheiten des Anlagerungsproduktes von 2,5-3 Mol Styrol an 1 Mol Phenol und einem Gehalt an Wasser von 0-97 Gew.-%, sowie gegebenenfalls noch Hilfsstoffen die eingangs beschriebenen Vorteile, nämlich Stabilität, Freiheit von organischen Lösungsmitteln und hohen Ausziehgrad, besitzen.

Im Rahmen dieser Erfindung sollen unter den praktisch wasserunlöslichen insektiziden Wirksubstanzen insbesondere Insektizide aus der Gruppe der Cyclocarbonsäureester verstanden werden. Beispiele für derartige Verbindungen sind folgende bevorzugte Wirksubstanzen: Permethrine, Cypermethrine und Cyfluthrine, deren systematische Bezeichnungen in Beispiel 1 wiedergegeben sind. Besonders bevorzugt sind Permethrine. Im allgemeinen enthalten die Mikroemulsionen 1-35 Gew.-%, vorzugsweise 5-15 Gew.-%, des praktisch wasserunlöslichen insektiziden Wirkstoffes bzw. der Mischung derartiger Wirkstoffe.

Erfindungsgemäss können die Mikroemulsionen einen geringen Gehalt eines wasserlöslichen Polymers enthalten, welcher bis zu 10 Gew.-% betragen kann, wobei der Bereich von 0,5-7,5 Gew.-% besonders bevorzugt ist. Formulierungen die dieses Polymer enthalten sind auch in Anwesenheit von Wasser, in einem Temperaturbereich von -5 bis +50°C, mindestens 6 Monate stabil. Wasserlösliche Polymere im Rahmen dieser Erfindung sind z.B.

a) Partialester eines verzweigten, carboxylgruppenhaltigen Polymers, wie beispielsweise Copolymere mit einer Hauptkette aus Kohlenstoffatomen, wobei ein Teil der Carbonsäuregruppen, welche von der Hauptkette verzweigen, mit hydrophilen Gruppen verestert ist und die Hauptkette darüberhinaus hydrophobe Alkylverzweigungen aufweist

b) Maleinsäure-Acrylsäure-Copolymerisate, wie beispielsweise Maleinsäure-Acrylsäure-Copolymerisate in Form eines Alkalisalzes mit einem mittleren Molekulargewicht von etwa 70000

c) Biopolymere auf Polysaccharidbasis, wie beispielsweise Xanthan

d) Copolymere von Maleinsäure mit Olefinen oder Methylvinylether, wie beispielsweise Maleinsäure-Olefin-Copolymerisate in Form eines Alkalisalzes mit einem mittleren Molekulargewicht von etwa 12000

e) Polymere oder Copolymere von Acrylsäuren und Vinylpyrrolidon, wie beispielsweise Polyacrylat oder Polyvinylpyrrolidon mit einem mittleren Molekulargewicht von etwa 15000

f) Alkylenoxid- Kondensationsprodukte, wie beispielsweise Anlagerungsprodukte von Ethylenoxid an Anlagerungsprodukte von Propylenoxid an Propylenglykol, wobei das mittlere Molekulargewicht des Polypropylenoxidblockes vorzugsweise etwa 1000-7000 beträgt und der prozentuale Anteil an Polyethylenoxid vorzugsweise zwischen 20 und 50% beträgt;

oder Copolymerisate aus Ethylenoxid und Propylenoxid gegebenenfalls auch an Amine wie Ethylendiamin; wie beispielsweise Verbindungen folgender Formeln

$$HO\text{-}(CH_2\text{-}CH_2\text{-}O)_x\text{-}(C(CH_3)H\text{-}CH_2\text{-}O)_y\text{-}(CH_2\text{-}CH_2\text{-}O)_z\text{-}H,$$
$$HO\text{-}(C(CH_3)H\text{-}CH_2\text{-}O)_x\text{-}(CH_2\text{-}CH_2\text{-}O)_y\text{-}(C(CH_3)H\text{-}CH_2\text{-}O)_z\text{-}H,$$

wobei x, y und z für Zahlen stehen, die so gewählt werden, dass die Verbindungen ein mittleres Molekulargewicht zwischen 1500 und 15000 aufweisen,

$$[H\text{-}(O\text{-}CH_2\text{-}CH_2)_{y'}\text{-}(O\text{-}C(CH_3)H\text{-}CH_2)_{x''}][H\text{-}(O\text{-}CH_2\text{-}CH_2)_{y'''}\text{-}(O\text{-}C(CH_3)H\text{-}CH_2)_{x'''}]N\text{-}CH_2\text{-}CH_2\text{-}N[(CH_2\text{-}C(CH_3)H\text{-}O)_x\text{-}(CH_2\text{-}CH_2\text{-}O)_y\text{-}H][(CH_2\text{-}C(CH_3)H\text{-}O)_{x'}\text{-}(CH_2\text{-}CH_2\text{-}O)_y\text{-}H],$$

$$[H\text{-}(O\text{-}C(CH_3)H\text{-}CH_2)_{y'}\text{-}(O\text{-}CH_2\text{-}CH_2)_{x''}][H\text{-}(O\text{-}C(CH_3)H\text{-}CH_2)_{y'''}\text{-}(O\text{-}CH_2\text{-}CH_2)_{x'''}]N\text{-}CH_2\text{-}CH_2\text{-}N[(CH_2\text{-}CH_2\text{-}O)_x\text{-}(CH_2\text{-}C(CH_3)H\text{-}O)_y\text{-}H][(CH_2\text{-}CH_2\text{-}O)_{x'}\text{-}(CH_2\text{-}C(CH_3)H\text{-}O)_y\text{-}H].$$

wobei x, x', x", x''', y, y', y", y''', z, z', z" und z''' für Zahlen stehen, die so gewählt werden, dass die Verbindungen ein mittleres Molekulargewicht zwischen 4000 und 10000 aufweisen.

Besonders bevorzugt sind die unter a) genannten Polymere mit einem mittleren Molekulargewicht von etwa 20000, wie beispielsweise Dapral GE 202®.

Die erfindungsgemäss verwendbaren Oxalkylierungsprodukte sind für sich bekannt. In Betracht kommen diejenigen, die in der EP-A 0 055 411 unter Formel III beschrieben sind. Ihre Herstellung erfolgt in bekannter Weise, z.B. nach den in der DE-AS 11 21 814 angegebenen Verfahren. Besonders bevorzugt sind Oxalkylierungsprodukte, die durch Umsetzung von Anlagerungsprodukten aus 2,5-3 Mol Styrol an 1 Mol Phenol mit etwa 18 Mol Ethylenoxid erhalten werden. Im allgemeinen enthalten die Mikroemulsionen 2-70 Gew.-%, vorzugsweise 10-30 Gew.-%, des Oxalkylierungsproduktes.

Gegebenenfalls können die Mikroemulsionen auch noch übliche Hilfsstoffe, wie z.B Mittel zur Kennzeichnung, Entschäumer, Duftstoffe und dergleichen enthalten. Der Gehalt vorstehender Hilfsstoffe beträgt bis zu etwa 10 Gew.-% der Mikroemulsion.

Der auf 100 Gew.-% fehlende Teil der Mikroemulsion ist Wasser. Somit kann der Gehalt an Wasser zwischen 0 und 97 Gew.-% betragen, vorzugsweise ist der Wasseranteil 47,5-84,5 Gew.-%.

Zum Erreichen der eingangs genannten vorteilhaften Eigenschaften der erfindungsgemässen Mikroemulsionen sollte das Verhältnis Wirkstoff zu Oxalkylierungsprodukt mindestens 1:1,5 betragen, wobei Verhältnisse zwischen 1:1,5 bis 1:3,5 technisch besonders vorteilhaft sind. Weiterhin sollte der Gehalt an wasserlöslichem Polymeren etwa 1/20 bis 1/1 des Gehalts des Wirkstoffes sein.

Die Herstellung der Mikroemulsionen erfolgt durch Zusammengeben der einzelnen Komponenten und Homogenisieren bei einer Temperatur von ca. 15-25°C, wobei man vorzugsweise zuerst die Wirksubstanz bzw. die Wirksubstanzen mit dem Oxalkylierungsprodukt mischt und danach das Polymer, gegebenenfalls in Wasser gelöst, unter Rühren zugibt. Die Konzentration der Mikroemulsion an Wirkstoff lässt sich durch Verdünnen mit Wasser beliebig einstellen.

Die erfindungsgemässen Mikroemulsionen eignen sich insbesondere zum Ausrüsten von Wolle bzw. wollhaltiger Substrate. Die Mikroemulsionen lassen sich nach allen üblichen Verfahren applizieren, sie ziehen sehr gut auf, haben einen Ausziehgrad von 90 bis 100%, was eine Verminderung der Abwässer bedeutet, und gewährleisten für den Wollanteil der Substrate einen langandauernden Motten- und Käferschutz.

Die folgenden Beispiele veranschaulichen die Erfindung ohne sie jedoch hierauf beschränken zu wollen.

Beispiel 1:

Die Herstellung einer Mikroemulsion erfolgt durch Zusammengeben von
10 Teilen 2,2-Dimethyl-3-(2,2-dichlorvinyl)-cyclopropancarbonsäure-3-phenoxybenzylester (Permethrin) und
23 Teilen eines Oxalkylierungsproduktes mit 18 Ethylenoxideinheiten des Anlagerungsproduktes von 2,5 bis 3 Mol Styrol an 1 Mol Phenol;
unter Rühren und bei etwa 40°C werden hierzu portionsweise
2,5 Teile eines Partialesters eines verzweigten carboxylgruppenhaltigen Polymers mit einem mittleren Molekulargewicht von 20000 gelöst in
64,5 Teilen Wasser
zugefügt.

Es wird eine klare Lösung erhalten, die bei Verdünnung mit beliebigen Mengen Wasser klar bleibt.

An Stelle der oben genannten 10 Teile Permethrin lassen sich bei vergleichbaren Ergebnissen z.B. auch 10 Teile der folgenden Wirksubstanzen verwenden:
2,2-Dimethyl-3-(2,2-dichlorvinyl)-cyclopropancarbonsäure-α-cyan-3-phenoxybenzylester (Cypermethrin) oder
2,2-Dimethyl-3-(2,2-dichlorvinyl)-cyclopropancarbonsäure-α-cyan-3- phenoxy-4-fluorbenzylester (Cyfluthrin).

Beispiel 2:

Man geht analog zu Beispiel 1 vor und verwendet:
10 Teile Permethrin
23 Teile des Oxalkylierungsproduktes aus Beispiel 1
2,5 Teile eines Anlagerungsproduktes von Ethylenoxid an das Anlagerungsprodukt von Propylenoxid an Propylenglykol mit einem mittleren Molekulargewicht des Polypropylenoxidblockes von etwa 1750 und einem prozentualen Anteil an Polyethylenoxid von etwa 40 %
64,5 Teile Wasser.

Es wird eine klare Lösung erhalten, die bei Verdünnung mit beliebigen Mengen Wasser klar bleibt.

Beispiele 3-10:

Setzt man anstelle von 2,5 Teilen des Anlagerungsproduktes gemäss Beispiel 2 mengengleich die folgenden Polymere gemäss Tabelle 1 ein, so erhält man ebenfalls klare Lösungen, die bei Verdünnung mit beliebigen Mengen Wasser klar bleiben.

Tabelle 1:

| Beispiel | Polymer |
|---|---|
| 3 | Anlagerungprodukt wie in Beispiel 2 mit einem mittleren Molekulargewicht des Polypropylenoxidblockes von etwa 2750 und einem prozentualen Anteil an Polyethylenoxid von etwa 20%. |
| 4 | Anlagerungprodukt wie in Beispiel 2 mit einem mittleren Molekulargewicht des Polypropylenoxidblockes von etwa 3250 und einem prozentualen Anteil an Polyethylenoxid von etwa 50%. |
| 5 | Xanthan. |
| 6 | Modifizierte Polyacrylsäure mit einem mittleren Molekulargewicht von etwa 3000. |
| 7 | Polyacrylat mit einem mittleren Molekulargewicht von etwa 15000. |
| 8 | Na-Salz eines Maleinsäure-Olefin-Copolymerisates mit einem mittleren Molekulargewicht von etwa 12000. |
| 9 | Na-Salz eines Maleinsäure-Acrylsäure-Copolymerisates mit einem mittleren Molekulargewicht von etwa 70000. |
| 10 | Polymerisat von Vinylpyrrolidon mit einem mittleren Molekulargewicht von etwa 15000. |

Beispiel 11:

30 Teile Permethrin,
60 Teile des Oxalkylierungsproduktes aus Beispiel 1 und
10 Teile des Partialesters eines verzweigten carboxylgruppenhaltigen Polymeres mit einem mittleren Molekulargewicht von 20000
werden vermischt.
Rührt man 10 Teile dieser viskosen Mischung in 100 Teile Wasser ein, so wird eine klare Lösung erhalten.

Beispiele 12 bis 45:

Es werden die in der Tabelle 2 angegebenen Substanzen in den angegebenen Mengen, wie in Beispiel 1 beschrieben, zusammengegeben. Als Oxalkylierungsprodukt wird ein Produkt mit 18 Ethylenoxideinheiten des Anlagerungsproduktes von 2,5 bis 3 Mol Styrol an 1 Mol Phenol verwendet. Die verwendeten Polymere sind in Tabelle 3 spezifiziert. Man erhält klare Lösungen, die bei Verdünnen mit beliebigen Mengen Wasser klar bleiben.

Tabelle 2:

| Beispiel Nr. | Permethrin Gew. % | Oxalkyl. Produkt Gew. % | Polymer Nr. | Gew. % | Wasser Gew. % |
|---|---|---|---|---|---|
| 12 | 1 | 2 | 1 | 0.5 | 96.5 |
| 13 | 1 | 2.3 | 1 | 0.25 | 96.45 |
| 14 | 1 | 3 | 1 | 0.05 | 95.95 |
| 15 | 1 | 3 | - | 0 | 96.0 |
| 16 | 5 | 7.5 | 1 | 2.5 | 85.0 |
| 17 | 5 | 10 | 1 | 2.5 | 82.5 |
| 18 | 5 | 12 | 1 | 1.5 | 81.5 |
| 19 | 5 | 15 | 1 | 5.0 | 75.0 |
| 20 | 5 | 15 | - | 0 | 80.0 |
| 21 | 10 | 17.5 | 1 | 2.5 | 70.0 |
| 22 | 10 | 23 | - | 0 | 67.0 |
| 23 | 10 | 23 | 1 | 0.05 | 66.95 |
| 24 | 10 | 23 | 1 | 0.5 | 66.5 |
| 25 | 10 | 23 | 1 | 1.0 | 66.0 |
| 26 | 10 | 23 | 1 | 1.5 | 65.5 |
| 27 | 10 | 23 | 1 | 5.0 | 62.0 |
| 28 | 10 | 23 | 1 | 7.5 | 59.5 |
| 29 | 10 | 23 | 1 | 10.0 | 57.0 |
| 30 | 20 | 40 | 1 | 5.0 | 35.0 |
| 31 | 20 | 50 | 1 | 5.0 | 25.0 |
| 32 | 20 | 45 | 1 | 10.0 | 25.0 |
| 33 | 20 | 50 | - | 0 | 30.0 |
| 34 | 32 | 65.5 | 1 | 2.5 | 0 |
| 35 | 30 | 70 | - | 0 | 0 |
| 36 | 10 | 23 | 2 | 2.5 | 64.5 |
| 37 | 10 | 23 | 3 | 2.5 | 64.5 |
| 38 | 10 | 23 | 4 | 2.5 | 64.5 |
| 39 | 10 | 23 | 5 | 0.05 | 66.95 |
| 40 | 10 | 23 | 5 | 0.1 | 66.9 |
| 41 | 10 | 23 | 5 | 0.25 | 66.75 |
| 42 | 10 | 23 | 6 | 2.5 | 64.5 |
| 43 | 10 | 23 | 7 | 2.5 | 64.5 |
| 44 | 30 | 60 | 8 | 10.0 | 0 |
| 45 | 30 | 60 | 9 | 10.0 | 0 |

Tabelle 3:

| Polymer Nr. | Spezifizierung |
|---|---|
| 1 | Partialester eines verzweigten carboxylgruppenhaltigen Polymers mit einem mittleren Molekulargewicht von etwa 20 000 |
| 2 | Anlagerungsprodukt von Ethylenoxid an das Anlagerungsprodukt von Propylenoxid an Propylenglykol mit einem mittleren Molekulargewicht von etwa 3250 und einem prozentualem Anteil an Propylenoxid von etwa 50% |
| 3 | Copolymerisat von Ethylenoxid und Propylenoxid, wobei Propylenoxid den zentralen Molekülteil bildet, mit einem mittleren Molekulargewicht von etwa 1950 |
| 4 | Copolymerisat von Ethylenoxid und Propylenoxid, wobei Propylenoxid den zentralen Molekülteil bildet, mit einem mittleren Molekulargewicht von etwa 7000 |
| 5 | Xanthan |
| 6 | Copolymerisat von Ethylenoxid und Propylenoxid an Ethylendiamin mit einem mittleren Molekulargewicht von etwa 5500 |
| 7 | Copolymerisat von Ethylenoxid und Propylenoxid an Ethylendiamin mit einem mittleren Molekulargewicht von etwa 6700 |
| 8 | Anlagerungsprodukt von Ethylenoxid an das Anlagerungsprodukt von Propylenoxid an Propylenglykol mit einem mittleren Molekulargewicht von etwa 1750 und einem prozentualem Anteil an Propylenoxid von etwa 40% |
| 9 | Anlagerungsprodukt von Ethylenoxid an das Anlagerungsprodukt von Propylenoxid an Propylenglykol mit einem mittleren Molekulargewicht von etwa 2750 und einem prozentualem Anteil an Propylenoxid von etwa 20% |

Beispiel 46:

In ein Ausrüstungsbad, das pro Liter Wasser

10     g Natriumsulfat,
3     g Essigsäure und
1     g der in Bsp. 1 beschriebenen Lösung

enthält, wird bei 40°C Wollgarn im Flottenverhältnis 1:10 eingebracht. Anschliessend wird auf 100°C erhitzt und die Ausrüstung auf übliche Weise fertiggestellt. Das erhaltene Wollgarn besitzt einen guten Schutz gegen Motten- und Käferfrass. Dieser Schutz besteht auch noch nach wiederholtem Waschen der Wolle.

Beispiel 47:

In ein Ausrüstungsbad, das pro Liter Wasser

3     g Ammoniumsulfat,
1     g Essigsäure,
1,5     g eines Kondensationsproduktes aus Phenolsulfonsäure, Di-(Hydroxyphenyl)-sulfon und Formaldehyd,
2 g     eines Kondensationsproduktes aus Naphthalinsulfonsäure und Formaldehyd und
1 g     der in Bsp. 1 beschriebenen Lösung

enthält, wird bei 40°C ein Mischgarn, bestehend aus 80% Wolle und 20% Polyamid, im Flottenverhältnis 1:10 eingebracht. Anschliessend wird auf 100°C erhitzt und die Ausrüstung auf übliche Weise fertiggestellt. Der Wollanteil in dem so behandelten Mischgarn besitzt einen guten Schutz gegen Motten- und Käferfrass. Dieser Schutz besteht auch noch nach wiederholtem Waschen der Wolle.

Beispiel 48:

In ein Ausrüstungsbad, das pro Liter Wasser

1     g Essigsäure,
2     g eines Kondensationsproduktes aus Naphthalinsulfonsäure und Formaldehyd
3     g einer Mischung aus Kresotinsäuremethylester und einem Anlagerungsprodukt von 30 Mol Ethylenoxid an Ricinusöl und
0,5     g der in Bsp. 1 beschriebenen Lösung

enthält, wird bei 40°C ein Mischgarn, bestehend aus 45% Wolle und 55% Polyester, im Flottenverhältnis 1:10 eingebracht. Anschliessend wird auf 100°C erhitzt und die Ausrüstung auf übliche Weise fertiggestellt. Der Wollanteil in dem so behandelten Mischgarn besitzt einen guten Schutz gegen Motten- und Käferfrass. Dieser Schutz besteht auch noch nach wiederholtem Waschen der Wolle.

Beispiel 49:

Rohwolle wird nach dem Kontinue-Waschprozess in einem Leviathan gewaschen und motten- und käferecht ausgerüstet. Dazu wird im letzten Bottich des Leviathans die Flotte mit Essigsäure auf einen pH-Wert unterhalb 7 eingestellt; ferner werden pro Liter Wasser

1 g der in Beispiel 1 beschriebenen Lösung

zugegeben. Die Behandlung erfolgt bei 40-60°C.
Zur Aufrechterhaltung der Konzentration im Behandlungsbad erfolgt ein Nachsatz von

10 g der in Beispiel 1 beschriebenen Lösung

pro kg Warengewicht der Rohwolle. Dieser Nachsatz wird als wässrige Lösung während der gesamten Behandlungszeit dem Bad kontinuierlich zugegeben. Die so behandelte Rohwolle besitzt einen guten Schutz gegen Motten- und Käferfrass. Sie kann ohne Beeinträchtigung ihrer technologischen Eigenschaften allen in der Textilindustrie üblichen Weiterbehandlungsprozessen zugeführt werden.

## Patentansprüche

1. Mikroemulsionen gekennzeichnet durch einen Gehalt von 1 bis 35 Gew.-% einer praktisch wasserunlöslichen insektiziden Wirksubstanz oder Mischung derartiger Wirksubstanzen, einen Gehalt von 0 bis 10 Gew.-% eines wasserlöslichen Polymeren, einen Gehalt von 2 bis 70 Gew.-% eines Oxalkylierungsproduktes mit 15 bis 20 Ethylenoxideinheiten des Anlagerungsproduktes von 2,5-3 Mol Styrol an 1 Mol Phenol und einen Gehalt an Wasser von 0-97 Gew.-%, sowie gegebenenfalls noch Hilfsstoffe.

2. Mikroemulsion gemäss Anspruch 1, dadurch gekennzeichnet, dass die praktisch wasserunlösliche insektizide Wirksubstanz aus der Gruppe der Cyclocarbonsäureester ausgewählt ist.

3. Mikroemulsion gemäss Anspruch 2, dadurch gekennzeichnet, dass die praktisch wasserunlösliche insektizide Wirksubstanz aus der Gruppe umfassend Permethrine, Cypermethrine und Cyfluthrine ausgewählt ist.

4. Mikroemulsion gemäss Anspruch 3, dadurch gekennzeichnet, dass die praktisch wasserunlösliche insektizide Wirksubstanz Permethrin ist.

5. Mikroemulsion gemäss Anspruch 1, dadurch gekennzeichnet, dass das wasserlösliche Polymer aus der Gruppe umfassend:
   a) Partialester eines verzweigten, carboxylgruppenhaltigen Polymers
   b) Maleinsäure-Acrylsäure-Copolymerisate
   c) Biopolymere auf Polysaccharidbasis
   d) Copolymere von Maleinsäure mit Olefinen oder Methylvinylether
   e) Polymere oder Copolymere von Acrylsäuren und Vinylpyrrolidon
   f) Alkylenoxid-Kondensationsprodukte
   ausgewählt wird.

6. Mikroemulsion gemäss Anspruch 5, dadurch gekennzeichnet, dass das wasserlösliche Polymer ein Partialester eines verzweigten, carboxylgruppenhaltigen Polymers ist.

7. Mikroemulsion gemäss einem der Ansprüche 1 bis 6, gekennzeichnet durch einen Gehalt von 5-15 Gew.-% einer praktisch wasserunlöslichen insektiziden Wirksubstanz oder einer Mischung derartiger Wirksubstanzen, einen Gehalt von 0,5-7,5 Gew.-% eines wasserlöslichen Polymers, einen Gehalt von 10-30 Gew.-% eines Oxalkylierungsproduktes mit etwa 18 Ethylenoxideinheiten des Anlagerungsproduktes von 2,5-3 Mol Styrol an 1 Mol Phenol und einem Gehalt von 47,5-84,5 Gew.-% an Wasser.

8. Mikroemulsion gemäss Anspruch 7, gekennzeichnet durch einen Gehalt von 5-15 Gew.-% an Permethrin, einen Gehalt von 0,5-7,5 Gew.-% eines Partialesters eines verzweigten carboxylgruppenhaltigen Polymers mit einem mittleren Molekulargewicht von 20000, einen Gehalt von 10-30 Gew.-% eines Oxalkylierungsproduktes mit etwa 18 Ethylenoxideinheiten des Anlagerungsproduktes von 2,5-3 Mol Styrol an 1 Mol Phenol und einem Gehalt von 47,5-84,5 Gew.-% an Wasser.

9. Herstellung einer Mikroemulsionen gemäss einem der Ansprüche 1 bis 8, dadurch gekennzeichnet, dass man die einzelnen Komponenten zusammengibt und homogenisiert.

10. Verwendung einer Mikroemulsionen gemäss einem der Ansprüche 1 bis 8 zum Ausrüsten von wollhaltigen Substraten gegen Motten- und Käferfrass.

**Europäisches Patentamt**

# EUROPÄISCHER RECHERCHENBERICHT

Nummer der Anmeldung

EP 92 81 0086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 055 401 (BAYER) <br> * Seite 5, Zeile 9 - Seite 6, Zeile 14; <br> Ansprüche; Beispiele 7-11 * | 1-4,9,10 | A01N25/04 |
| Y | | 1,5-8 | |
| Y | FR-A-2 452 250 (KAO SOAP) <br> * Seite 1, Zeile 34 - Seite 2, Zeile 18 * <br> * Seite 2, Zeile 26 * <br> * Seite 3, Zeile 10 - Seite 5, Zeile 15; <br> Ansprüche; Beispiel 4 * | 1,5-8 | |
| A | EP-A-0 160 182 (AMERICAN CYANAMID CO.) <br> * Seite 3, Zeile 16 - Seite 4, Zeile 1; <br> Ansprüche; Beispiele 1,5,6,12,13 * | 1-9 | |
| D,A | DE-B-1 121 814 (BAYER) <br> * Beispiel 3 * | 1 | |

RECHERCHIERTE SACHGEBIETE (Int. Cl.5)

A01N

Der vorliegende Recherchenbericht wurde für alle Patentansprüche erstellt

| Recherchenort | Abschlußdatum der Recherche | Prüfer |
|---|---|---|
| DEN HAAG | 29 MAI 1992 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)